# EUROPÄISCHE PATENTSCHRIFT

(11) **EP 1 035 901 B1**
(45) Veröffentlichungstag und Bekanntmachung des Hinweises auf die Patenterteilung: **03.07.2002**
(21) Anmeldenummer: 98961199.1
(22) Anmeldetag: 14.11.1998
(51) Int. Cl.: B01D 27/06, B01D 27/14, B01D 27/10

(54) **DOPPELFILTER**
DOUBLE FILTER
DOUBLE FILTRE

(30) Priorität: 26.11.1997 DE 19752376
(43) Veröffentlichungstag der Anmeldung: 20.09.2000
(73) Patentinhaber: FILTERWERK MANN & HUMMEL GmbH, 71631 Ludwigsburg (DE)
(72) Erfinder: LUKA, Helmut, D-70806 Kornwestheim (DE)
(74) Vertreter: Voth, Gerhard, Dipl.-Ing.
(86) Internationale Anmeldenummer: EP9807295
(87) Internationale Veröffentlichungsnummer: WO9928009

(56) Entgegenhaltungen:
- EP-A- 0 362 554
- EP-A- 0 558 828
- US-A- 4 265 748
- US-A- 5 447 627

## Beschreibung

Die Erfindung betrifft ein Filter mit mindestens zwei Filterelementen, die in einer gemeinsamen Filterpatrone axial aufeinanderfolgend angeordnet sind und die insbesondere ein Fein- und ein Grobfilter zur Filterung verunreinigter Flüssigkeiten bilden.

Ein derartiger Doppelfilter ist aus der EP 0 558 828 BI bekannt, bei der sich zwischen dem Fein- und dem Grobfilter, die beide axial aufeinanderfolgend in einem Filterpatronengehäuse angeordnet sind, eine Schraubenfeder befindet. Diese drückt den Feinfilter gegen den Gehäusedeckel um deren Verbindung zueinander abzudichten. Mit Hilfe einer weiteren Schraubenfeder stützt sich der Grobfilter gegen den Gehäuseboden ab und wird gegen die Kraft der ersten Schraubenfeder dichtend gegen den Feinfilter gedrückt.

Auf diese Weise wird zwar die Anordnung von zwei, eventuell unterschiedlichen Filterelementen in einer Filterpatrone ermöglicht, durch die Vielzahl der einzelnen während des Zusammenbauvorgangs zu vereinigenden Bauteile ist jedoch die Montage des Filters aufwendig und fehlerträchtig.

### Aufgabe und Lösung

Es wird demzufolge als Aufgabe der Erfindung angesehen, einen Filter mit mindestens zwei Filterelementen zu schaffen, der mit geringem Aufwand störungsfrei bei der Endmontage zusammensetzbar ist und zuverlässig funktioniert.

Diese Aufgabe wird gelöst durch Verbindungsmittel, mittels derer die Filterelemente direkt miteinander zu einer in der Filterpatrone anzuordnenden Baueinheit verbindbar sind. Das bietet bei der Endmontage den großen Vorteil, daß nur noch die Baueinheit bestehend aus den Filterelementen in das Gehäuse der Filterpatrone eingesetzt werden muß, während gemäß dem genannten Stand der Technik noch mindestens vier Teile einzusetzen waren. Die Endmontage erfolgt weitaus zügiger und Fehler, die ansonsten zu Ausschuß oder aufwendigen Nachbesserungen führen, können weitgehend vermieden werden. Eine Passung oder Position der Filterelemente zueinander wird bei der Endmontage automatisch erreicht. Der Arbeitsschritt der Verbindung der Filterelemente mit Verbindungsmitteln zu einer Baueinheit kann bevorzugt direkt nach der Herstellung der Filterelemente und der Verbindungsmittel erfolgen, so daß die fertigen Baueinheiten leichter handhabbar sind als die einzelnen Filterelemente. Vorteilhaft sind die Verbindungsmittel so ausgebildet, daß die Verbindung auf einfache Weise herstellbar ist und zumindest teilautomatisch erfolgen kann.

Die Verbindungsmittel können pro Verbindung zweier Filterelemente an nur einem, alternativ an beiden Filterelementen vorgesehen sein. Des weiteren ist es möglich, für jeweils eine Verbindung zwischen zwei Filterelementen ein Verbindungsmittel vorzusehen, oder ein einziges Verbindungsmittel für alle in den Filter eingebauten Filterelemente. Besonders bevorzugt sind die Verbindungsmittel im Bereich der Verbindungsstelle zwischen den Filterelementen vorgesehen, insbesondere an einem Filterelement fest und an dem anderen Filterelement lösbar angebracht. Auf diese Weise ist ein genau definiertes Zusammen- und Demontieren der Baueinheit möglich, da die Reihenfolge des Anbringens der Verbindungsmittel an den Filterelementen festgelegt ist. Durch die Lösbarkeit der Verbindung an einer Stelle ist ein Austauschen einzelner Filterelemente möglich.

Bei einer bevorzugten Ausführung bestehen die Verbindungsmittel aus Kunststoff und verbinden die Filterelemente kraftschlüssig, vorzugsweise über angeformte Rasten. Eine derartige Verbindung kann ohne Werkzeug geschlossen bzw. gelöst werden. Alternativ kann eine Verbindung, insbesondere die feste Verbindung, durch Kleben o. dgl. erfolgen. Ebenso wäre eine Art Verschraubung denkbar.

Bevorzugt sind wenigstens zwei Filterelemente derart angeordnet, daß sie von der Flüssigkeit im wesentlichen parallel durchströmbar sind. Vorzugsweise sind die Filterelemente bezüglich ihres Filtergrades verschiedenartig, insbesondere ist wenigstens eines als Fein- und eines Grobfilterelement ausgebildet. Die Parallelanordnung ermöglicht einen gesteigerten Durchsatz durch den Filter, was vor allem bei verschiedenartigen Filterstufen von Vorteil sein kann, da der Feinfilter (in der Regel mit geringerem Durchsatz) nur einen Teil des Gesamtdurchsatzes übernimmt und so ein ausreichender Gesamtdurchsatz gewährleistet ist. Das Feinfiltern lediglich eines Teiles des Flüssigkeitsstromes wird als ausreichend angesehen.

Wenigstens zwei Filterelemente können unterschiedlich groß ausgeführt sein, wobei sie vorzugsweise bei gleicher Querschnittsfläche unterschiedliche axiale Abmessungen aufweisen können. Besonders bei einer Verwendung von Feinund Grobfiltern ist dies vorteilhaft, da in einem derartigen Fall der Feinfilter kleiner ausgeführt sein kann.

Eine bevorzugte Ausgestaltung der Erfindung weist eine Trenneinrichtung für den Flüssigkeitsstrom in wenigstens zwei Teilströme auf, insbesondere einen Haupt- und einen Nebenstrom, wobei vorzugsweise ein Flüssigkeitsstrom nach einem getrennten Durchlauf durch Filterelemente in verschiedene Teilströme aufteilbar ist. Bevorzugt erfolgt eine Aufteilung in jeweils einen bzgl. des Reinheitsgrades unterschiedlichen Rein- und einen Reinstflüssigkeitsstrom. Eine derartige Anordnung ist besonders dann von Vorteil, wenn der zu reinigende Flüssigkeitsstrom für verschiedene Zwecke, die jeweils unterschiedliche Anforderungen an die Reinheit stellen, verwendet werden soll. Vorteilhaft kann die Trenneinrichtung Teil der Verbindungsmittel sein um die Anzahl der Bauteile zu verringern.

Besonders bevorzugt liegen die Filterelemente mit ihren Stirnflächen an den Verbindungsmitteln an, wobei sie vorzugsweise durch die Verbindungsmittel bzw. einen Teil derselben gegeneinander abgedichtet sein können. Auf diese Weise übernehmen die Verbindungsmittel zusätzlich die vorteilhafte Funktion einer Abdichtung der Filterelemente gegeneinander, was besonders bei einer Trennung des Flüssigkeitsstromes in Teilströme wichtig ist.

Bei einer bevorzugten Ausführung ist wenigstens ein Filterelement ein gefalteter Papierfilter, vorzugsweise ein zylinderförmiger Faltenbalgfilter. Ein derartiges Filterelement kann eine Filterung in radialer Richtung bewirken und weist ein Maximum an Filterfläche bei geringem Volumen auf.

Vorteilhaft besteht der Filter als Haupt-Nebenstrom-Wechselfilter zum Reinigen eines Ölstromes, vorzugsweise für einen Verbrennungsmotor, aus zwei zylinderförmigen Filterelementen, insbesondere einem Fein- und einem Grobfilter, die über Rasten eines am Feinfilter montierten Verbindungselementes am Grobfilter zu einer Baueinheit als Filterpatrone miteinander verbunden und in ein haubenartiges Filtergehäuse eingebaut sind. Bei einer Verwendung für einen Verbrennungsmotor ist ein derartiger Haupt-Nebenstrom-Wechselfilter besonders geeignet, da an unterschiedlichen Schmierstellen des Motors unterschiedliche Reinheitsgrade erwünscht sind. So ist beispielsweise an den Ventilen eine größere Reinheit zu empfehlen als beispielsweise im Kurbelwellengehäuse. Ein derartiger Wechselfilter wird bei einem Ölfilterwechsel einfach gegen den alten Filter ausgetauscht.

Besonders vorteilhaft kann in dem Filter ein Überdruckventil zur Überbrückung wenigstens eines Filterelementes vorgesehen sein vorzugsweise im Bereich einer zentralen Öffnung einer dem Boden der Filterpatrone zugewandten Stirnwand eines Filterelementes. Sollte ein Filterelement durch Verunreinigungen zugesetzt sein und der als notwendig erachtete Mindestdurchsatz nicht mehr erreichbar sein, kann ein Filterelement durch wenigstens einen Teil des Flüssigkeitsstromes umgangen werden. Dies stellt eine Art Sicherungsfunktion des Filters dar.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht
sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ein Ausführungsbeispiel der Erfindung ist in den Zeichnungen dargestellt und wird im folgenden beschrieben. In den Zeichnungen zeigen:
- Fig. 1: einen seitlichen Teilschnitt eines erfindungsgemäßen Filters, bestehend aus zwei Filterelementen mit Verbindungsstück in einem Filterpatronengehäuse und
- Fig. 2: eine stark vergrößerte Detailzeichnung der Verbindung des Verbindungsstücks mit den beiden Filterelementen.

### Beschreibung eines bevorzugten Ausführungsbeispiels

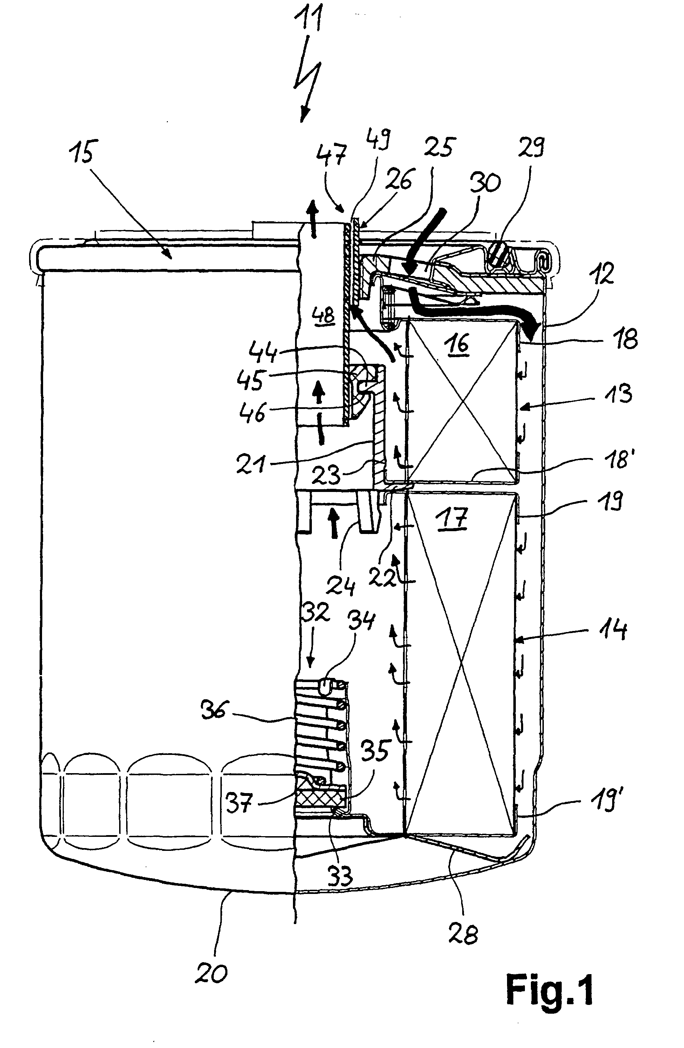

Die Fig. 1 zeigt einen Teilschnitt durch einen erfindungsgemäßen Filter 11, in dessen zylinderförmigem Gehäuse 12 axial mit diesem fluchtend ein Feinfilter 13 und ein Grobfilter 14 angeordnet sind. Diese Filterelemente sind nach Art eines Hohlzylinders ausgeführt und erstrecken sich über den größten Teil der inneren lichten Höhe des Gehäuses 12, wobei der Grobfilter 14 in etwa doppelt so lang ist wie der Feinfilter 13. Kreisringdicke und Radius der Filterelemente 13 und 14 betragen etwa den halben Radius des Gehäuses 12 und sind bei beiden Filterelementen gleich.

Sowohl der Feinfilter 13 als auch der Grobfilter 14 sind als zylinderförmige Faltenbalgfilter ausgeführt, die jeweils aus Fein- bzw. Grobfiltermitteln 16 bzw. 17 bestehen, in diesem Fall aus einer Fein- bzw. Grobpapiermanschette, die an ihren Stirnflächen zur Abdichtung jeweils Endscheiben 18 und 181 bzw. 19 und 191 aufweisen. Die die Filtermittel 16 und 17 gegeneinander abschließenden Endscheiben 18f und 19 können identisch ausgeführt sein, greifen mit ihrem Außendurchmesser ein Stück um die Filtermittel und bilden zur mittleren Längsachse hin im wesentlichen kreisrunde Öffnungen.

Verbunden ist der Feinfilter 13 mit dem Grobfilter 14 durch ein Verbindungsstück 21, das im wesentlichen zylinderförmig ist und mit seinem größten Teil in die Innenöffnung des Feinfilters 13 reicht. Dabei sitzt es mit Passung in der von einem radiäl nach innen und dann rechtwinklig zum Deckel 15 des Filters 11 reichenden Abschnittes der Endscheibe 18' gebildeten Öffnung. Knapp oberhalb der Kante 39 der Endscheibe 18' weist das Verbindungsstück 21 auf seiner Außenseite einen umlaufenden Wulst 23 bzw. alternativ mehrere Nokken auf, der an der Kante 39 anliegend ein Herausrutschen des Verbindungsstücks aus der Öffnung verhindert.

Über den in der Fig. 1 nach unten stehenden Innenrand der Endscheibe 19 des Grobfilters 14 greifen an dem Verbindungsstück 21 angeformte Rastnocken 24, die mehrfach radial verteilt und axial verlaufend an dem Verbindungsstück 21 angeformt sind. Auf diese Weise können der Feinfilter 13 und der Grobfilter 14 durch einfaches Ineinanderstecken mittels des Verbindungsstückes 21 zu einer Baueinheit verbunden werden, wobei die Verbindung Feinfilter-Verbindungsstück nur schwer lösbar gestaltet ist.

Zur Zentrierung der Baueinheit aus den Filterelementen weist der nach innen ragende, obere Bereich der Endscheibe 18 des zum Filterdeckel 15 hin eine S-förmig doppelt nach innen gebogene Form auf. In die derart entstandene Öffnung ragt ein kurzer, an der Unterseite des Filtergehäusedeckels 15 angeformter, nach unten weisender Rohransatz 25 ein. Dieser bildet gleichzeitig die zentrale Ölauslaßöffnung 26, die mit einem Innengewinde versehen ist. Die Verbindung zwischen Feinfiltermetallgehäuse 18 und Rohransatz 25 ist abgedichtet, hierzu können beispielsweise Dichtringe oder Rundschnurgummis verwendet werden.

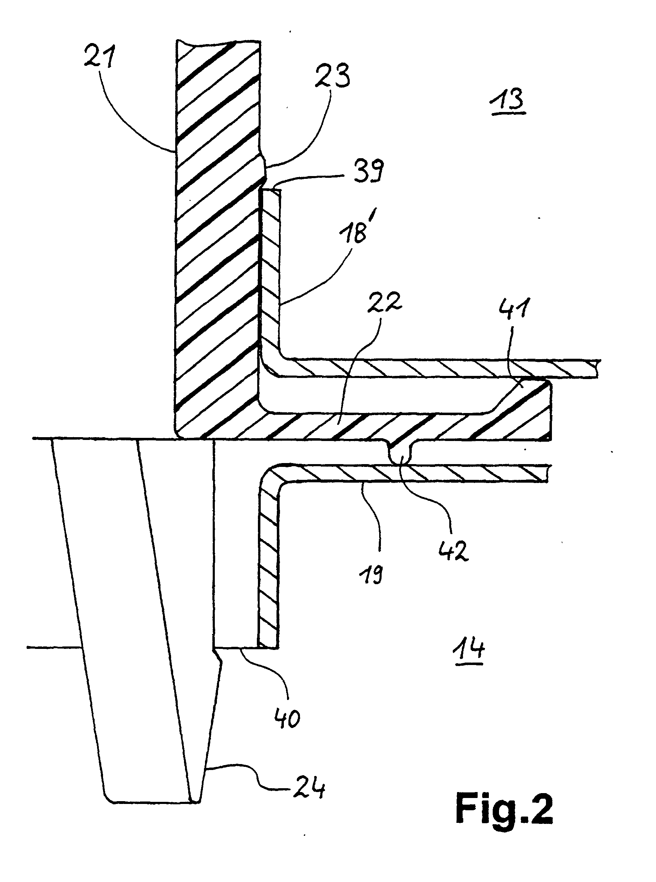

Die notwendige Abdichtung der Verbindung zwischen dem Feinfilter 13 und dem Grobfilter 14 im Bereich der Verbindungsstelle erfolgt über einen radial nach außen abstehenden Kranz 22 des Verbindungsstückes 21, an dessen beiden Flächen jeweils die Endscheiben 18 und 19' der Filter anliegen. Details hierzu können der Fig. 2 entnommen werden.

Gegen den Gehäuseboden 20 des Filters 11 wird die Baueinheit aus den Filtern 13 und 14 mittels einer speziell geformten Tellerfeder 28 abgestützt. Deren Federkraft sorgt im wesentlichen für die Anpressung des oberen Teils der Baueinheit, bestehend aus dem S-förmigen Ansatz der Endscheibe 18, gegen den Gehäusedeckel 15. Die Tellerfeder 28 kann zusätzlich zur Zentrierung des unteren Endes der Baueinheit beitragen.

In den Gehäusedeckel 15, der durch Umbördeln mit dem Gehäuse 12 verbunden wird, ist eine umlaufende Runddichtung 29 eingesetzt. Diese dichtet den Filter 11 gegen eine Anlagefläche hin ab, an der der Filter 11 mittels des Innengewindes der Auslaßöffnung 26 angeschraubt wird. Des weiteren sind Einlaßöffnungen 30 rings um die Ölauslaßöffnung 26 verteilt angebracht. Durch diese tritt zu reinigendes Öl in den Filter 11 ein (siehe dicker Pfeil) und fließt an der undurchlässigen Endscheibe 18 vorbei in den Bereich des Filters 11 zwischen der Mantelfläche der Filter 13 und 14 und der Innenseite des Gehäuses 12. Dort tritt der Ölstrom sowohl durch das Feinfilter 13 als auch durch das Grobfilter 14 bzw. die Filtermittel 16 und 17 von außen nach innen hindurch, wobei er von Verunreinigungen und Schmutzpartikeln gereinigt wird. An der inneren Mantelfläche der Filtermittel 16 und 17 tritt das verschiedenartig gefilterte Öl aus und strömt durch die zentralen Durchgänge bzw. das jeweilige Innenrohr der Filter in Richtung der Ölauslaßöffnung 26.

Im oberen Bereich weist das Verbindungsstück 21 einen radial nach innen ragenden Vorsprung 44 auf. Eine zum Einführende hin keilförmig gestaltete Dichtung 45 übergreift diesen Vorsprung 44, der in eine entsprechend ausgeformte Nut 46 der vorzugsweise aus Gummi bestehenden Dichtung aufgenommen wird. Von oben greift ein doppelwandiges Rohr 47 in die zentrale Öffnung der Dichtung 45 ein, wobei diese Verbindung durch eine Dichtlippe an der Innenseite der Öffnung der Dichtung abgedichtet wird. Dieses Rohr stellt einen Teil einer Trenneinrichtung für Öl dar, das zu einem unterschiedlichen Reinheitsgrad gefiltert worden ist. Nach der Montage des Filters am Verbrennungsmotor dichtet das motorseitig angeordnete Rohrstück 47 in Verbindung mit der Dichtung 45 die beiden Teilströme voneinander ab, die entweder durch den zentralen Teil 48 oder den Zwischenteil 49 abfließen. Die beiden Wandungen des Rohres 47 können durch in Umfangsrichtung verteilte Halterippen punktförmig miteinander verbunden sein, um einen ausreichenden Durchflußquerschnitt zu erhalten.

Als Sicherheitsfunktion ist in die dem Gehäuseboden zugewandte Öffnung des Grobfilters 14 ein Überdruckventil 32 eingesetzt. Die Endscheibe 19' ist im Bereich der unteren Öffnung als Durchmesserverengung 33 nach innen gefalzt, verläuft in etwa zylinderförmig in Richtung der Oberseite des Gehäuses 12 und ist an ihrem Ende mit radial angeordneten, nach innen zweifach um 900 abgebogenen Fahnen 34 versehen. Nach innen wird gegen die Durchmesserverengung 33 eine die untere Öffnung abdichtende Ventilplatte 35 eingesetzt, die bevorzugt aus einem elastischen Material wie beispielsweise Kunststoff besteht. Zwischen diese Ventilplatte 35 und die Fahnen 34 ist eine Schraubenfeder 36 eingespannt, die für einen abgedichteten Sitz der Ventilplatte an der Durchmesserverengung 33 sorgt. Die Schraubenfeder 36 liegt an der Ventilplatte 35 unter Zwischenschaltung einer Scheibe 37 an.

Die Stärke der Schraubenfeder 36 ist so bemessen, daß ab einem bestimmten von unten her an der Ventilplatte 35 anliegenden Öldruck die Ventilplatte gegen die Federkraft nachgibt und ein direktes Einströmen von Öl aus dem Außenbereich des Filters in die zentrale Öffnung des Grobfilters 14 möglich ist. Ein derartiger Überdruck kann durch zugesetzte Filterelemente 13 bzw. 14 entstehen, wobei durch das Überdruckventil 32 weiterhin die Ölversorgung des Verbrennungsmotors, wenngleich mit nicht gereinigtem Öl, gewährleistet wird.

In der stark vergrößerten Darstellung der Verbindungsstelle zwischen dem Feinfilter 13 und dem Grobfilter 14 in Fig. 2 sind einfach schraffiert die Endscheiben 18' und 19 dargestellt. Das im wesentlichen zylindrische Verbindungsstück 21 sitzt in der zentralen Öffnung der Endscheibe 18 des Feinfilters 13, wobei ein Lösen der Baueinheit aus diesen beiden Teilen dadurch verhindert wird, daß der umlaufende Wulst 23 gegen die in der Zeichnung nach oben ragende Kante 39 anliegt. Ebenso sind die Rastnocken 24 des Verbindungsstückes 21 dargestellt, die über die nach unten ragende abschließende Kante 40 der Endscheibe 19 greifen und so eine Verbindung schaffen.

Der von dem Verbindungsstück 21 radial abstehende Kranz 22 weist an seinem Außendurchmesser eine nach oben ragende obere Dichtlippe 41 auf, die dichtend an der unteren Stirnseite der Endscheibe 18' anliegt. Ein Stück radial nach innen versetzt befindet sich abstehend von der Unterseite des Kranzes 22 eine untere Dichtlippe 42, die ebenso dichtend an der oberen Stimseite der Grobfilterendscheibe 19 anliegt. Zumindest der Kranz 22 samt den beiden Dichtlippen 41 und 42 ist rotationssymmetrisch, so daß die Dichtlippen entlang ihres gesamten Umfanges die beiden Endscheiben gegeneinander abdichten.

Diese Abdichtung ist deswegen entscheidend, damit zwischen den Filtern 13/14 bzw. den Endscheiben kein ungereinigtes Öl in den zentralen Auslaufkanal eintreten kann. Anstelle der Dichtlippen 41 bzw. 42 könnten auch Dichtungen, vorzugsweise Dichtringe oder eine Profildichtung, oder angespritzte Dichtlippen aus elastischem Material an dem Kranz 22 vorgesehen sein, die die notwendige Abdichtung vornehmen.

Mittels des Wulstes 23 und der Rastnocken 24 des Verbindungsstücks werden somit die beiden Filter 13 und 14 zu einer Baueinheit verbunden, wobei ein Teil des Verbindungsstückes gleichzeitig eine Abdichtung der beiden gewährleistet.

### Funktion

Nach dem Herstellungsprozeß der Filterelemente und des Verbindungsstücks 21 wird in dieses zuerst die Dichtung 45 gesteckt, anschließend wird das Verbindungsstück in die Öffnung in der Endscheibe 181 gedrückt. Dabei rastet der Wulst 23 an der Kante 39 ein und das Verbindungsstück ist fest mit dem Feinfilter 13 verbunden. Das Rohr 47 ist an dem Verbrennungsmotor vorhanden.

Als nächstes wird der Grobfilter 14, der wahlweise schon mit dem Überdruckventil 32 versehen ist, auf das aus dem Feinfilter ragende Ende des Verbindungsstücks mit den Rastnocken 24 geschoben, die an dessen Gehäuserand zur Verbindung einrasten. Diese Schritte können von Hand vorgenommen werden, ebenso ist ein maschineller Ablauf aufgrund der Konzeption der Verbindungen mittels Rastung vorteilhaft möglich.

Die Baueinheit aus den beiden mittels des Verbindungsstücks 21 vereinigten Filterelementen 13 und 14 kann nun sehr einfach in ein Filtergehäuse 12 eingebracht werden, in dessen Boden 20 sich die Tellerfeder 28 befindet. Passungsschwierigkeiten der Filterelemente untereinander oder kompliziertes Zusammenstecken innerhalb des Filtergehäuses entfallen. Abschließend wird der Filtergehäusedeckel 15 auf das Filtergehäuse 12 aufgesetzt und durch Umbördeln o.dgl. mit diesem verbunden, wobei sein Rohransatz 25 in den oberen Teil der Endscheibe 18 des Feinfilters 13 dichtend eingreift.

Der fertige Filter 11 wird im Einsatz als Filterpatrone, beispielsweise mittels eines Innengewindes im Rohransatz 25, an einem Verbrennungsmotor befestigt, wobei eine Abdichtung über die Runddichtung 29 erfolgt. Über die Öleinlaßöffnungen 30 im Filtergehäusedeckel 15 tritt verunreinigtes Öl (siehe dicker Pfeil) aus dem Motor in den Filter ein. Es strömt in den Bereich zwischen den Außenseiten der Filterelemente 13 und 14 und der Gehäusewandung, verteilt sich dort und wird gleichzeitig sowohl durch den Feinfilter 13 als auch durch den Grobfilter 14 gedrückt (siehe kleine Pfeile). An der Innenseite der Filtermittel 16 und 17 verläßt das gereinigte Öl diese (siehe kleine Pfeile), wobei der jeweilige Durchsatz von den Filtergeometrien und vor allem von dem Filtergrad abhängt.

Während anschließend ein durch den Grobfilter 14 tretender Reinölstrom durch den zentralen Teil des Rohres 47 aus dem Filter 11 abgeführt wird (siehe mitteldicker Pfeil), läuft ein durch den Feinfilter 13 hindurchtretender Reinstölstrom zwischen den Wandungen des Rohres 47 aus dem Filter 11 heraus (siehe mitteldicker Pfeil). Außerhalb des Filters 11, bevorzugt an der Anschlußfläche, können auf nicht dargestellte Weise die beiden Ölströme voneinander getrennt weitertransportiert werden. Es bietet sich beispielsweise an, den Reinstölstrom zur Schmierung der Ventile zu verwenden, während der Reinölstrom für weniger beanspruchte Schmierstellen, wie beispielsweise die Kurbelwelle, verwendet werden kann.

## Patentansprüche

1. Filter (11) mit mindestens zwei Filterelementen, die in einer gemeinsamen Filterpatrone axial aufeinander folgend angeordnet sind, die insbesondere ein Fein- (13) und ein Grobfilter (14) zur Filterung verunreinigter Flüssigkeiten bilden, **gekennzeichnet durch** Verbindungsmittel, mittels derer die Filterelemente (13,14) direkt miteinander zu einer in der Filterpatrone anzuordnenden Baueinheit verbindbar sind.

2. Filter nach Anspruch 1, **dadurch gekennzeichnet, daß** die Verbindungsmittel im Bereich der Verbindungsstelle zwischen den Filterelementen (13,14) vorgesehen, insbesondere an einem Filterelement fest und an dem anderen lösbar angebracht sind.

3. Filter nach Anspruch 1 oder 2, **dadurch gekennzeichnet, daß** die vorzugsweise aus Kunststoff bestehenden Verbindungsmittel die Filterelemente (13,14) kraftschlüssig verbinden, insbesondere über angeformte Rasten.

4. Filter nach einem der vorhergehenden Ansprüche, **dadurch gekennzeichnet, daß** wenigstens zwei Filterelemente (13,14) von der Flüssigkeit parallel durchströmbar angeordnet sind, wobei vorzugsweise die Filterelemente bezüglich des Filtergrades verschiedenartig sind, insbesondere wenigstens eines als feines und wenigstens eines als grobes Filterelement ausgebildet ist.

5. Filter nach einem der vorhergehenden Ansprüche, **dadurch gekennzeichnet, daß** wenigstens zwei Filterelemente (13,14) unterschiedlich groß sind, insbesondere bei gleicher Querschnittsfläche unterschiedliche axiale Abmessungen aufweisen.

6. Filter nach einem der vorhergehenden Ansprüche, **gekennzeichnet durch** eine Trenneinrichtung für den Flüssigkeitsstrom in wenigstens zwei Teilströme, insbesondere einen Haupt- und einen Nebenstrom, wobei vorzugsweise ein Flüssigkeitsstrom nach einem zumindest teilweisen, insbesondere getrennten, Durchlauf **durch** Filterelemente in verschiedene Teilströme aufteilbar ist, insbesondere in jeweils einen bezüglich des Reinheitsgrades unterschiedlichen Rein- und einen Reinstflüssigkeitsstrom.

7. Filter nach Anspruch 6, **dadurch gekennzeichnet, daß** die Trenneinrichtung Teil der Verbindungsmittel ist.

8. Filter nach einem der vorhergehenden Ansprüche, **dadurch gekennzeichnet, daß** die Filterelemente (13,14) mit ihren Stirnflächen an den Verbindungsmitteln anliegen, insbesondere durch diese gegeneinander abgedichtet sind.

9. Filter nach einem der vorhergehenden Ansprüche, **dadurch gekennzeichnet, daß** wenigstens ein Filterelement ein gefalteter Papierfilter, insbesondere ein zylinderförmiger Faltenbalgfilter, ist.

10. Filter nach einem der vorhergehenden Ansprüche, **dadurch gekennzeichnet, daß** er als Haupt-Nebenstrom-Wechselfilter zum Reinigen eines Ölstromes, insbesondere für einen Verbrennungsmotor, aus zwei zylinderförmigen Filterelementen, insbesondere einem Fein- (13) und einem Grobfilter (14), besteht, die über Rastnocken (24) eines am Feinfilter montierten Verbindungsstückes (21) am Grobfilter zu einer Baueinheit als Filterpatrone miteinander verbunden und in ein haubenartiges Filtergehäuse (12) eingebaut sind.

11. Filter nach einem der vorhergehenden Ansprüche, **dadurch gekennzeichnet, daß** ein Überdruckventil (32) zur Überbrückung eines Filterelementes, insbesondere im Bereich einer zentralen Öffnung einer dem Boden der Filterpatrone zugewandten Stimwand eines Filterelementes, vorgesehen ist.

## Claims

1. Filter (11), having at least two filter elements which are disposed in a common filter cartridge so as to follow each other axially, and which form, more especially, a fine filter (13) and a coarse filter (14) for filtering contaminated liquids, **characterised by** connecting means, by means of which the filter elements (13,14) are directly interconnectable to form a structural unit which is to be disposed in the filter cartridge.

2. Filter according to claim 1, **characterised in that** the connecting means are provided in the region of the junction between the filter elements (13,14), more especially they are securedly mounted on one filter element and detachably mounted on the other filter element.

3. Filter according to claim 1 or 2, **characterised in that** the connecting means, which are preferably formed from plastics material, connect the filter elements (13,14) in a force-locking manner, more especially via moulded-on locking means.

4. Filter according to one of the preceding claims, **characterised in that** at least two filter elements (13,14) are disposed so as to have the liquid flowing therethrough in parallel, wherein the filter elements are preferably different in respect of the degree of filtration, more especially at least one is in the form of a fine filter element and at least one is in the form of a coarse filter element.

5. Filter according to one of the preceding claims, **characterised in that** at least two filter elements (13,14) have different sizes, more especially they have different axial dimensions yet identical cross-sectional areas.

6. Filter according to one of the preceding claims, **characterised by** a parting arrangement for parting the liquid flow into at least two partial flows, more especially a main flow and a secondary flow, wherein preferably one liquid flow is dividable into various partial flows after it has passed through filter elements at least partially, more especially separately, more especially into a respective filtered liquid flow and a high-purity liquid flow, which differ in respect of their degree of purity.

7. Filter according to claim 6, **characterised in that** the parting arrangement is part of the connecting means.

8. Filter according to one of the preceding claims, **characterised in that** the filter elements (13,14) abut with their end faces against the connecting means, more especially they are sealed from each other by said connecting means.

9. Filter according to one of the preceding claims, **characterised in that** at least one filter element is a folded paper filter, more especially a cylindrical bellows-type filter.

10. Filter according to one of the preceding claims, **characterised in that**, as a main flow/secondary flow interchangeable filter for cleaning an oil flow, more especially for an internal combustion engine, said filter comprises two cylindrical filter elements, more especially a fine filter (13) and a coarse filter (14), which elements are interconnected via locking cams (24) of a connection-piece (21), which is mounted on the fine filter, at the coarse filter to form a structural unit as a filter cartridge and are installed in a hood-like filter housing (12).

11. Filter according to one of the preceding claims, **characterised in that** an excess-pressure valve (32) is provided in order to bridge a filter element, more especially in the region of a central opening in an end wall of a filter element facing the base of the filter cartridge.

## Revendications

1. Filtre (11) comprenant au moins deux éléments filtrants se suivant axialement dans une cartouche filtrante commune et constituant notamment un filtre fin (13) et un filtre grossier (14) pour filtrer des liquides pollués,
**caractérisé par**
des moyens de liaison permettant de relier directement les éléments filtrants de manière à former une unité constructive à monter dans le cartouche de filtre.

2. Filtre selon la revendication 1,
**caractérisé en ce que**
les moyens de liaison sont prévus dans la zone de liaison située entre les éléments filtrants (13, 14) et sont notamment montés de manière fixe sur un élément filtrant et de manière amovible sur l'autre.

3. Filtre selon l'une quelconque des revendications 1 ou 2,
**caractérisé en ce que**
les moyens de liaison qui sont de préférence en matière plastique, relient à force les éléments filtrants (13, 14) en particulier par des arrêts moulés.

4. Filtre selon l'une quelconque des revendications précédentes,
**caractérisé en ce qu'**
au moins deux éléments filtrants (13, 14) sont montés de manière à être traversés en parallèle par le liquide, et de préférence ces éléments diffèrent par leur degré de filtration, en particulier au moins l'un d'eux est un élément à filtrage fin et au moins un autre est un élément à filtrage grossier.

5. Filtre selon l'une quelconque des revendications précédentes,
**caractérisé en ce qu'**
au moins deux éléments filtrants (13, 14) sont de grandeurs différentes, en particulier ils ont une même section mais des dimensions axiales différentes.

6. Filtre selon l'une quelconque des revendications précédentes,
**caractérisé en ce qu'**
un dispositif de séparation du courant liquide divise celui-ci en au moins deux courants partiels, notamment un courant principal et un courant secondaire, et en particulier un courant liquide, après un passage au moins partiel, en particulier séparé, à travers des éléments filtrants, peut être divisé en différents courants partiels, notamment chaque fois en ce qui concerne le degré de pureté, en un courant purifié et un courant purifié davantage.

7. Filtre selon la revendication 6,
**caractérisé en ce que**
le dispositif de séparation est une partie des moyens de liaison.

8. Filtre selon l'une quelconque des revendications précédentes,
**caractérisé en ce que**
les éléments filtrants (13, 14) sont appliqués par leurs faces frontales sur les moyens de liaison, qui notamment les rendent étanches l'un par rapport à l'autre.

9. Filtre selon l'une quelconque des revendications précédentes,
**caractérisé en ce qu'**
au moins un élément filtrant est un filtre en papier plié, en particulier un filtre cylindrique à soufflet.

10. Filtre selon l'une quelconque des revendications précédentes,
**caractérisé en ce qu'**
en tant que filtre échangeable à courant principal et courant secondaire servant à purifier un courant d'huile, en particulier pour un moteur à combustion interne, il est constitué de deux éléments filtrants cylindriques, notamment un filtre fin (13) et un filtre grossier (14) qui par l'intermédiaire de crans d'arrêt (24) d'une pièce de liaison (21) montée sur le filtre fin sont reliés de manière à former une unité constituant une cartouche filtrante et sont incorporés à un boîtier de filtre (12) à capot.

11. Filtre selon l'une quelconque des revendications précédentes,
**caractérisé en ce que**
pour ponter un élément filtrant, une soupape de surpression (32) est montée en particulier dans la zone d'une ouverture centrale d'une paroi frontale de l'élément filtrant, située en face du fond de la cartouche filtrante.
